# EUROPEAN PATENT APPLICATION

(11) **EP 4 672 108 A1**
(43) Date of publication of application: **31.12.2025**
(21) Application number: 25183213.5
(22) Date of filing: 17.06.2025
(51) Int. Cl.: G06Q 10/0639, G06Q 10/20

(54) **SYSTEMS, APPARATUSES, METHODS, AND COMPUTER PROGRAM PRODUCTS FOR MONITORING ADVANCED PROCESS CONTROL ASSETS**

(30) Priority: 27.06.2024 US 202418756817
(71) Applicant: Honeywell International Inc., Charlotte, NC 28202 (US)
(72) Inventor: MANJUNATHA, Rajeeva Naduthota, Charlotte, 28202 (US); HALLIHOLE, Sriram, Charlotte, 28202 (US); DAS, Ranjeet, Charlotte, 28202 (US); JAISWAL, Shivanky, Charlotte, 28202 (US); RAJ, Sumit, Charlotte, 28202 (US)
(74) Representative: Haseltine Lake Kempner LLP

(57) **Abstract**

Embodiments of the present disclosure provide improved asset monitoring. A set of one or more performance indicators for an asset is identified. A set of one or more weighted performance indicator scores corresponding to the set of one or more performance indicators is generated. A performance health score for the asset is generated for the asset based on the set of one or more performance indicators and uptime data by aggregating the set of one or more performance indicators with respect to the uptime data. Performance of one or more prediction-based actions based on the performance health score.

## Description

### TECHNICAL FIELD

The present disclosure relates, generally, to monitoring of advanced process control assets. Example embodiments provide improved monitoring of advanced process control assets.

### BACKGROUND

In various contexts, processing facilities are often managed using process control and automation systems. Many process control and automation systems include multiple hierarchical layers that, individually and/or collectively, include a large number of assets that require continuous monitoring to ensure maximum performance. Applicant has discovered problems with current implementations of monitoring assets in process control and automation systems, including advanced process control assets. Through applied effort, ingenuity, and innovation, Applicant has solved many of these identified problems by developing solutions embodied in the present disclosure, which are described in detail below.

### BRIEF SUMMARY

In accordance with one aspect of the present disclosure, a computer-implemented method for monitoring APC assets and/or PWO assets is provided. The computer-implemented method is executable utilizing any of a myriad of computing device(s) and/or combinations of hardware, software, and/or firmware. In some example embodiments, an example computer-implemented method includes identifying, by one or more processors, a set of one or more performance indicators for an asset; generating, by the one or more processors, a set of one or more weighted performance indicator scores corresponding to the set of one or more performance indicators; generating, by the one or more processors and based on the set of one or more performance indicators and uptime data, a performance health score for the asset by aggregating the set of one or more performance indicators with respect to the uptime data; and initiating performance of one or more prediction-based actions based on the performance health score.

In some embodiments, the computer-implemented method of claim 1, further includes assigning a weight to each performance indicator of the set of one or more performance indicators.

In some embodiments, the set of one or more performance indicators comprise (i) usefulness performance indicator, (ii) criticality performance indicator, (iii) value performance indicator, (iv) acceptance performance indicator, and (v) reliability performance indicator.

In some embodiments, generating the set of one or more weighted performance indicator scores comprises generating, for a sampling period, a weighted usefulness score corresponding to the usefulness performance indicator by determining, based on one more control variable conditions, a control variable usefulness score for each control variable of one or more control variables associated with the asset; aggregating the control variable usefulness score for each control variable to generate an aggregated control variable usefulness score; determining a manipulated variable count associated with the asset; determining a cumulative usefulness score by determining a ratio of the aggregated control variable usefulness score to the manipulated variable count; and applying the corresponding assigned weight to the cumulative usefulness score.

In some embodiments, generating a control variable usefulness score for a control variable comprises determining, for the sampling period, a control variable count based on a set of one or more control variable constraint conditions of the one or more control variable conditions by determining whether the control variable satisfies at least one control variable constraint condition from the set of one or more control variable constraint conditions; determining, for the sampling period, a control variable status count based on a set of one or more control variable status conditions of the one or more control variable conditions by determining whether the control variable satisfies the one or more control variable status conditions; and determining a ratio of the control variable count to the control variable status count.

In some embodiments, generating the set of one or more weighted performance indicator scores comprises generating, for a sampling period, a weighted criticality score at least in part by mapping an objective into manipulated variables; and determining ratio of the manipulated variables that have gradients to a count of manipulated variables.

In some embodiments, initiating the performance of one or more prediction-based actions comprises causing rendering of a user interface comprising one or more representations of the performance health score.

In some embodiments, initiating the performance of one or more prediction-based actions comprises generating actionable insight data based on the performance health score; and providing the actionable insight data to a user device.

In accordance with another aspect of the present disclosure, an apparatus for monitoring APC assets and/or PWO assets is provided. The apparatus in some embodiments includes at least one processor and at least one non-transitory memory, the at least one non-transitory memory having computer-coded instructions stored thereon. The computer-coded instructions in execution with the at least one processor causes the apparatus to perform any of the example computer-implemented methods described herein. In some other embodiments, the apparatus includes means for performing each step of any of the computer-implemented methods described herein.

In accordance with another aspect of the present disclosure, a computer program product for monitoring APC assets and/or PWO assets is provided. The computer program product in some embodiments includes at least one non-transitory computer-readable storage medium having computer program code stored thereon. The computer program code in execution with at least one processor is configured for performing any one or the example computer-implemented methods described herein.

### BRIEF DESCRIPTION OF THE SEVERAL VIEWS OF THE DRAWINGS

Having thus described the embodiments of the disclosure in general terms, reference now will be made to the accompanying drawings, which are not necessarily drawn to scale, and wherein:
FIG. 1A illustrates a block diagram of an example system architecture in which embodiments of the present disclosure may operate.
FIG. 1B illustrates a block diagram of an example industrial process control and automation system in accordance with at least one example embodiment of the present disclosure.
FIG. 2 illustrates a block diagram of an example apparatus in accordance with at least one example embodiment of the present disclosure.
FIG. 3 illustrates a data flow diagram showing example data structures for monitoring advanced process control assets in accordance with at least one example embodiment of the present disclosure.
FIGS. 4A-B each illustrate an example user interface in accordance with at least one example embodiment of the present disclosure.
FIG. 5 illustrates flowchart including operations of an example process for monitoring process control assets in accordance with at least one example embodiment of the present disclosure.

### DETAILED DESCRIPTION

Various embodiments of the present disclosure now will be described more fully hereinafter with reference to the accompanying drawings, in which some, but not all, embodiments of the present disclosure are shown. Indeed, the present disclosure may be embodied in many different forms and should not be construed as limited to the embodiments set forth herein, rather, these embodiments are provided so that this disclosure will satisfy applicable legal requirements.

The term "or" is used herein in both the alternative and conjunctive sense, unless otherwise indicated. The terms "illustrative" and "example" are used to be examples with no indication of quality level. Terms such as "computing," "determining," "generating," and/or similar words are used herein interchangeably to refer to the creation, modification, or identification of data. Further, "based on," "based at least in part on," "based at least on," "based upon," and/or similar words are used herein interchangeably in an open-ended manner such that they do not indicate being based only on or based solely on the referenced element or elements unless so indicated. Like numbers refer to like elements throughout.

### OVERVIEW AND TECHNICAL IMPROVEMENTS

Various embodiments of the present disclosure are generally directed to systems, apparatuses, methods, and computer program products for monitoring assets associated with a process control and automation system. Example of such assets include including advanced process control (APC) assets. Example embodiments disclosed herein address technical challenges associated with monitoring APC assets (e.g., controllers, and/or the like).

In the process industry, live monitoring of a large number of assets is challenging. Generally, there are assets at different layers that require continuous monitoring to ensure maximum performance. For example, at the regulatory layer, proportional-integral derivative (PID) controllers and instruments need to be monitored. As another example, at the advanced control layer, APC assets need to be continuously monitored to ensure maximum performance. In advanced control layer, along with unit level APC controllers (also referred to as secondary APC controllers), plant wide optimizer (PWO) assets also need to be monitored. Given that PWO may be internally connected to secondary APC assets, monitoring the overall health of PWO is desired and critical in order to achieve maximum benefit.

Moreover, the number of control assets that need to be monitored is often high. For example, in the case of APC, there may be 10 to 15 MPC assets in a typical site (e.g., industrial site) and consisting of over 300 variables (e.g., control variables (CV), manipulated variable (MV), disturbance variables (DV), and/or the like). Accordingly, it is challenging and often not feasible to manually monitor each asset. In this regard, there is a need for a consolidated view and an overall performance asset score (referred to herein as performance health score) to, for example, focus on key assets that are critical for the process.

In the current state of art, the user is usually tasked to decide the overall performance of the asset based on various key performance indicators (KPIs) and their values. Given that many of these KPIs are not normalized, it is technically difficult for the user to decide the overall performance just by seeing individual KPI values. Furthermore, since there are no overall performance indicators available, this information cannot be rolled up to higher levels in the plant hierarchy. Therefore, it is challenging and difficult to analyze the performance of different units, plants, and/or sites without having an overall performance asset score (performance health score) per APC asset.

Example embodiments of the present disclosure provide for improved asset monitoring, and in particular improved APC asset monitoring. Example embodiments of the present disclosure provide systems and methods for generating overall performance asset score (performance health score) for each asset and actionable insights for maximizing utilization, uptime, and performance of APC and PWO assets at various levels of a plant hierarchy. Example embodiments of the present disclosure leverage deep process industry knowledge with big data analytics.

In example embodiments, a set of one or more performance indicators for an asset is identified. The asset may be an APC asset or a PWO asset. In some embodiments, the set of one or more performance indicators comprise one or more of usefulness performance indicator, criticality performance indicator, value performance indicator, acceptance performance indicator, or reliability performance indicator. In some embodiments, a usefulness performance indicator describes how capacity to add value is used. In some embodiments, a criticality performance indicator describes how necessary a controller is to a unit operation. In some embodiments, a value performance indicator describes how much value a controller is generating. In some embodiments, an acceptance performance indicator describes how smoot a controller is operating. In some embodiments, a reliability performance indicator describes how well control variable constraints are honored.

In example embodiments, a weighted usefulness score is determined based on active control variable (CV) constraints and total number of manipulated variables (MV's) that are considered in determining the weighted usefulness score. This technique of determining the usefulness performance of an asset advantageously may be applied to various or all APC assets (e.g., controllers) associated with the process control and automation system. Moreover, this technique penalizes controllers that have MV limits pinched in. The more MV limits being hit, the smaller the value. This technique further penalizes controllers not optimizing to constraints or when an optimizer is not running. According to example embodiments, a controller is most useful if it is hitting only CV constraints.

In example embodiments, a weighted criticality score is determined by mapping an objective function into manipulated variables and determining a ratio of the manipulated variables that have gradients to the number of manipulated variables. This technique penalizes controllers that are not used to optimize operations or only partially user manipulated variables. According to example embodiments, a controller is more critical if all manipulated variables are pushing in an economic direction.

In example embodiments, a weighted value score is determined based on a fraction of time a controller is close to its steady state objective function value. In some example embodiments, controllers that do not have an objective function can be assigned a fixed weighted value between 0 to 1. According to example embodiments, a controller is generating a maximum value if it spends substantially all time close to its steady state objective function value.

In example embodiments, a weighted acceptance score is determined by determining MV differences, adding the MV differences over time, and normalizing the result to a value between 0 and 1, and then subtracting it from one ("1"). This technique of determining acceptance score for an asset advantageously may be applied to various or all APC assets (e.g., controllers) associated with the process control and automation system, and it measure how much the APC asset is moving the process around. According to example embodiments, an APC asset (e.g., controller) that is not moving around much will have a high degree of acceptance.

In example embodiments, a weighted reliability score is determined by aggregating (e.g., summing, and/or the like) CV constraint violations over time and normalizing the result to a value between 0 and 1, then subtracting it from one ("1"). This technique of determining reliability score for an asset advantageously may be applied to various or all APC assets (e.g., controllers), and it measures how well a controller is keeping a process within define limits. According to example embodiments, a controller that is holding limits very well is considered not reliable or not safe.

In example embodiments, the overall performance asset score (performance health score) is generated for the asset based on the weighted performance indicator scores (e.g., weighted usefulness score weighted criticality score, weighted value score, weighted reliability score, weighted reliability score). By doing so, embodiments of the present disclosure provide for continuous and accurate reporting of plant wide optimization (PWO) and APC overall performance status; provides a generalized index for the PWO and APC overall performance score at all hierarchy levels; identifies the overall performance score (performance health score) using various key performance indicators (KPIs) calculated for PWO and APC assets; defines the importance of an asset and utilizes this information in determining the overall asset performance; defines unavailability of an asset and considers this information in determining overall asset performance. Accordingly, embodiments of the present disclosure provide various technical advantages and improvement to the technical field of process control and automation as well as other technical fields and systems.

### DEFINITIONS

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

As used herein, the terms "data," "content," "digital content," "information," and similar terms may be used interchangeably to refer to data capable of being transmitted, received, and/or stored in accordance with embodiments of the present disclosure. Further, where a computing entity is described herein to receive data from another computing entity, it will be appreciated that the data may be received directly from another computing entity or may be received indirectly via one or more intermediary computing entities, such as, for example, one or more servers, relays, routers, network access points, base stations, hosts, and/or the like, sometimes referred to herein as a "network." Similarly, where a computing entity is described herein to send data to another computing device, it will be appreciated that the data may be sent directly to another computing entity or may be sent indirectly via one or more intermediary computing devices, such as, for example, one or more servers, relays, routers, network access points, base stations, hosts, and/or the like.

### EXAMPLE SYSTEMS AND APPARATUSES OF THE DISCLOSURE

Embodiments of the present disclosure may be implemented in various ways, including as computer program products that comprise articles of manufacture. Such computer program products may include one or more software components including, for example, software objects, methods, data structures, or the like. A software component may be coded in any of a variety of programming languages. An illustrative programming language may be a lower-level programming language such as an assembly language associated with a particular hardware architecture and/or operating system platform. A software component comprising assembly language instructions may require conversion into executable machine code by an assembler prior to execution by the hardware architecture and/or platform. Another example programming language may be a higher-level programming language that may be portable across multiple architectures. A software component comprising higher-level programming language instructions may require conversion to an intermediate representation by an interpreter or a compiler prior to execution.

Other examples of programming languages include, but are not limited to, a macro language, a shell or command language, a job control language, a script language, a database query or search language, and/or a report writing language. In one or more example embodiments, a software component comprising instructions in one of the foregoing examples of programming languages may be executed directly by an operating system or other software component without having to be first transformed into another form. A software component may be stored as a file or other data storage construct. Software components of a similar type or functionally related may be stored together such as, for example, in a particular directory, folder, or library. Software components may be static (e.g., pre-established, or fixed) or dynamic (e.g., created or modified at the time of execution).

A computer program product may include a non-transitory computer-readable storage medium storing applications, programs, program modules, scripts, source code, program code, object code, byte code, compiled code, interpreted code, machine code, executable instructions, and/or the like (also referred to herein as executable instructions, instructions for execution, computer program products, program code, and/or similar terms used herein interchangeably). Such non-transitory computer-readable storage media include all computer-readable media (including volatile and non-volatile media).

A non-volatile computer-readable storage medium may include a floppy disk, flexible disk, hard disk, solid-state storage (SSS) (e.g., a solid-state drive (SSD), solid-state card (SSC), solid-state module (SSM)), enterprise flash drive, magnetic tape, or any other non-transitory magnetic medium, and/or the like. A non-volatile computer-readable storage medium may also include a punch card, paper tape, optical mark sheet (or any other physical medium with patterns of holes or other optically recognizable indicia), compact disc read only memory (CD-ROM), compact disc-rewritable (CD-RW), digital versatile disc (DVD), Blu-ray disc (BD), any other non-transitory optical medium, and/or the like. Such a non-volatile computer-readable storage medium may also include read-only memory (ROM), programmable read-only memory (PROM), erasable programmable read-only memory (EPROM), electrically erasable programmable read-only memory (EEPROM), flash memory (e.g., Serial, NAND, NOR, and/or the like), multimedia memory cards (MMC), secure digital (SD) memory cards, SmartMedia cards, CompactFlash (CF) cards, Memory Sticks, and/or the like. Further, a non-volatile computer-readable storage medium may also include conductive-bridging random access memory (CBRAM), phase-change random access memory (PRAM), ferroelectric random-access memory (FeRAM), non-volatile random-access memory (NVRAM), magnetoresistive random-access memory (MRAM), resistive random-access memory (RRAM), Silicon-Oxide-Nitride-Oxide-Silicon memory (SONOS), floating junction gate random access memory (FJG RAM), Millipede memory, racetrack memory, and/or the like.

A volatile computer-readable storage medium may include random access memory (RAM), dynamic random access memory (DRAM), static random access memory (SRAM), fast page mode dynamic random access memory (FPM DRAM), extended data-out dynamic random access memory (EDO DRAM), synchronous dynamic random access memory (SDRAM), double data rate synchronous dynamic random access memory (DDR SDRAM), double data rate type two synchronous dynamic random access memory (DDR2 SDRAM), double data rate type three synchronous dynamic random access memory (DDR3 SDRAM), Rambus dynamic random access memory (RDRAM), Twin Transistor RAM (TTRAM), Thyristor RAM (T-RAM), Zero-capacitor (Z-RAM), Rambus in-line memory module (RIMM), dual in-line memory module (DIMM), single in-line memory module (SIMM), video random access memory (VRAM), cache memory (including various levels), flash memory, register memory, and/or the like. It will be appreciated that where embodiments are described to use a computer-readable storage medium, other types of computer-readable storage media may be substituted for or used in addition to the computer-readable storage media described above.

As should be appreciated, various embodiments of the present disclosure may also be implemented as methods, apparatus, systems, computing devices, computing entities, and/or the like. As such, embodiments of the present disclosure may take the form of an apparatus, system, computing device, computing entity, and/or the like executing instructions stored on a computer-readable storage medium to perform certain steps or operations. Thus, embodiments of the present disclosure may also take the form of an entirely hardware embodiment, an entirely computer program product embodiment, and/or an embodiment that comprises a combination of computer program products and hardware performing certain steps or operations.

Embodiments of the present disclosure are described below with reference to block diagrams and flowchart illustrations. Thus, it should be understood that each block of the block diagrams and flowchart illustrations may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments may produce specifically configured machines performing the steps or operations specified in the block diagrams and flowchart illustrations. Accordingly, the block diagrams and flowchart illustrations support various combinations of embodiments for performing the specified instructions, operations, or steps.

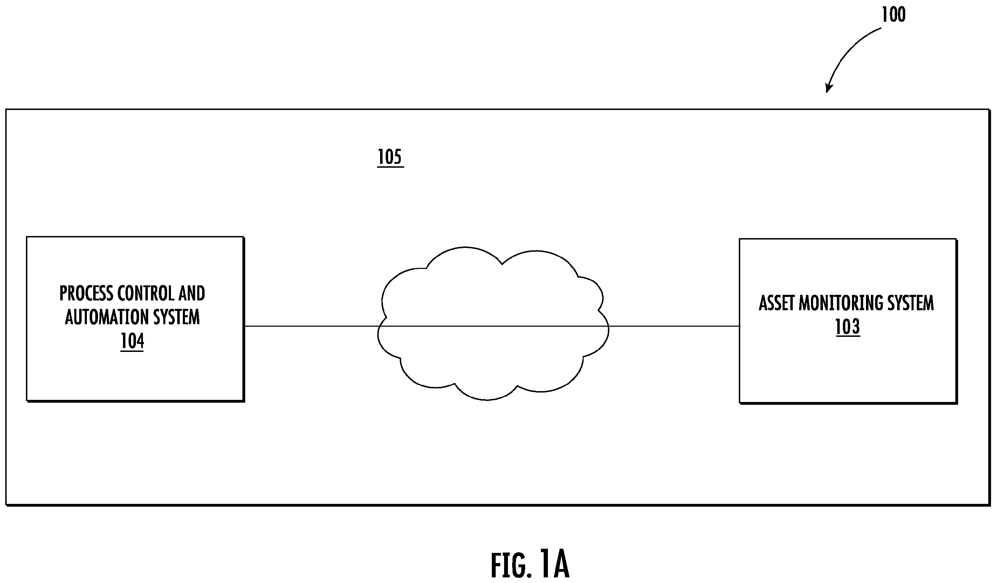

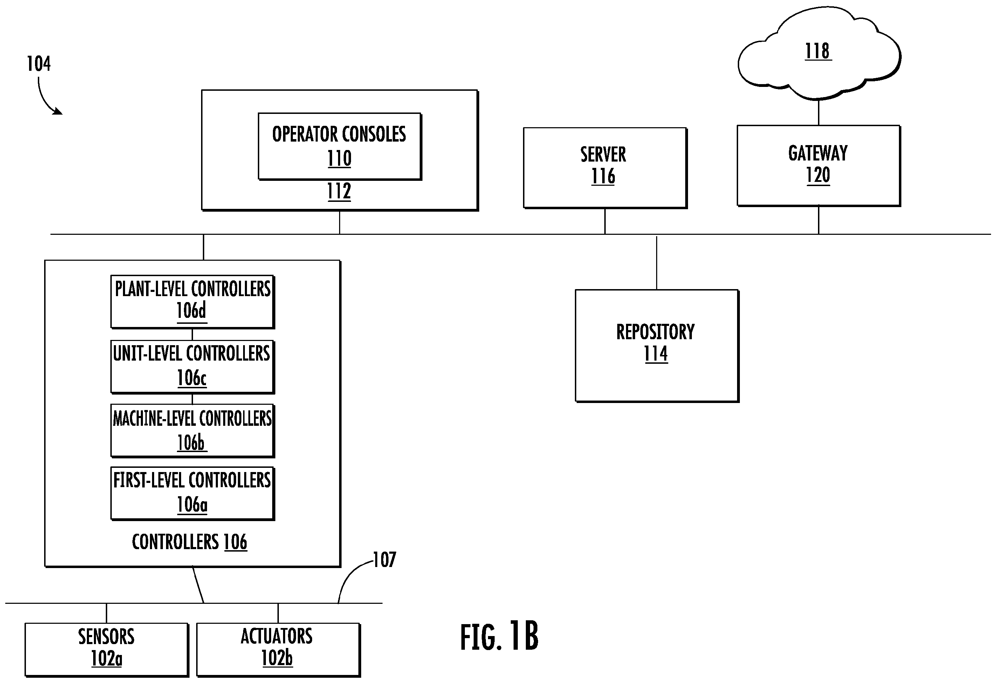

In this regard, FIG. 1A provides an example overview of a system architecture 100 in accordance with at least some example embodiments of the present disclosure. The depiction of the example architecture 100 is not intended to limit or otherwise confine the embodiments described and contemplated herein to any particular configuration of elements or systems, nor is it intended to exclude any alternative configurations or systems for the set of configurations and systems that can be used in connection with embodiments of the present disclosure. Rather, FIG. 1A and the architecture 100 disclosed therein is merely presented to provide an example basis and context for the facilitation of some of the features, aspects, and uses of the methods, apparatuses, computer readable media, and computer program products disclosed and contemplated herein. It will be understood that while many of the aspects and components presented in FIG.1 are shown as discrete, separate elements, other configurations may be used in connection with the methods, apparatuses, computer readable media, and computer programs described herein, including configurations that combine, omit, separate, and/or add aspects and/or components. The example system architecture 100 may be used in a plurality of domains and not limited to any specific application as disclosed herewith. In particular, while some example embodiments are described herein with reference to industrial plant domain, the example system architecture 100 may be used in a plurality of domains and limited to any specific application as disclosed herein. The plurality of domains may include healthcare, industrial, manufacturing, education, retail, to name a few.

As illustrated, the system architecture 100 includes a process control and automation system 104 in communication with an asset monitoring system 103. In some embodiments, the process control and automation system 104 communicates with the asset monitoring system 103 over one or more communications network(s), for example a communications network 105.

It should be appreciated that the communications network 105 in some embodiments is embodied in any of a myriad of network configurations. In some embodiments, the communications network 105 embodies a public network (e.g., the Internet). In some embodiments, the communications network 105 embodies a private network (e.g., an internal localized, or closed-off network between particular devices). In some other embodiments, the communications network 105 embodies a hybrid network (e.g., a network enabling internal communications between particular connected devices and external communications with other devices). The communications network 105 in some embodiments includes one or more base station(s), relay(s), router(s), switch(es), cell tower(s), communications cable(s) and/or associated routing station(s), and/or the like. In some embodiments, the communications network 105 includes one or more user-controlled computing device(s) (e.g., a user owned router and/or modem) and/or one or more external utility devices (e.g., Internet service provider communication tower(s) and/or other device(s)).

Each of the components of the system architecture 100 may be communicatively coupled to transmit data to and/or receive data from one another over the same or different wireless and/or wired networks embodying the communications network 105. Such configuration(s) include, without limitation, a wired or wireless Personal Area Network (PAN), Local Area Network (LAN), Metropolitan Area Network (MAN), Wide Area Network (WAN), and/or the like. Additionally, while FIG. 1A illustrate certain system entities as separate, standalone entities communicating over the communications network 105, the various embodiments are not limited to this architecture. In other embodiments, one or more computing entities share one or more components, hardware, and/or the like, or otherwise are embodied by a single computing device such that connection(s) between the computing entities are over the communications network 105 are altered and/or rendered unnecessary. For example, in some embodiments, the process control and automation system 104 includes some or all of the asset monitoring system 103, such that an external communications network 105 is not required.

In some embodiments, the process control and automation system 104 and the asset monitoring system 103 are embodied in an on-premises system within or associated with a processing plant. In some such embodiments, the process control and automation system 104 and the asset monitoring system 103 are communicatively coupled via at least one wired connection. Alternatively or additionally, in some embodiments, the process control and automation system 104 embodies or includes the asset monitoring system 103, for example as a software component of a single enterprise terminal.

The process control and automation system 104 includes any number of computing device(s), system(s), physical component(s), and/or the like, that facilitates producing of any number of products, for example utilizing particular configurations that cause processing of particular inputs available within the process control and automation system 104. In some embodiments, the process control and automation system 104 includes one or more physical component(s), connection(s) between physical component(s), and/or computing system(s) that control operation of each physical component therein. Alternatively or additionally, in some embodiments the process control and automation system 104 includes one or more computing system(s) that are specially configured to operate the physical component(s) in a manner that produces one or more particular product(s) simultaneously. In some embodiments, process control and automation system 104 includes one or more computing device(s) and/or system(s) embodied in hardware, software, firmware, and/or a combination thereof, that configure and/or otherwise control operation of one or more physical component(s) in the processing plant. For example, in some embodiments, such computing device(s) and/or system(s) include one or more programmable logic controller(s), MPC(s), application server(s), centralized control system(s), and/or the like, that control(s) configuration and/or operation of at least one physical component. It will be appreciated that different process control and automation system 104 may include different physical component(s), computing system(s), and/or the like.

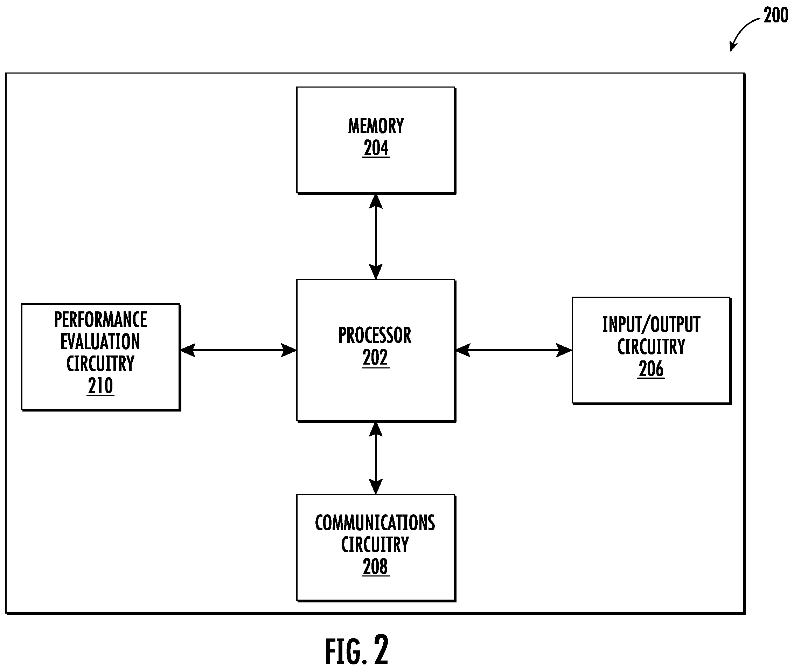

FIG. 1B illustrates a block diagram of an example industrial process control and automation system 104 in accordance with at least one example embodiment of the present disclosure. As shown in FIG. 2, the system 104 includes various components that facilitate production or processing of at least one product or other material. For instance, the system 104 can be used to facilitate control over components in one or more industrial plants. Each plant may represent one or more processing facilities (or one or more portions thereof), such as one or more manufacturing facilities for producing at least one product or other material. In general, each plant may implement one or more industrial processes and may, individually or collectively, be referred to as a process system. A process system generally represents any system or portion thereof configured to process one or more products or other materials.

In FIG. 1B, the system 104 includes one or more sensors 102a and one or more actuators 102b. The sensors 102a and actuators 102b represent components in a process system that may perform any of a wide variety of functions. For example, the sensors 102a could measure a wide variety of characteristics in the process system, such as flow, pressure, or temperature. Also, the actuators 102b could alter a wide variety of characteristics in the process system, such as, for example, valve openings. Each of the sensors 102a includes any suitable structure for measuring one or more characteristics in a process system. Each of the actuators 102b includes any suitable structure for operating on or affecting one or more conditions in a process system.

At least one network 107 is coupled to the sensors 102a and actuators 102b. The network 107 facilitates interaction with the sensors 102a and actuators 102b. For example, the network 107 could transport measurement data from the sensors 102a and provide control signals to the actuators 102b. The network 107 could represent any suitable network or combination of networks. In an example embodiment, the communications network 107 includes an ethernet network, electrical signal network, pneumatic control signal network, and/or the like. In some embodiments, the network 107 may include, without limitation, a wired or wireless Personal Area Network (PAN), Local Area Network (LAN), Metropolitan Area Network (MAN), Wide Area Network (WAN), and/or the like.

The system 104 includes various controllers 106. The controllers 106 may be used in the system 104 to perform various functions in order to control one or more industrial processes. For example, a first set of controllers 106 may user measurements from one or more sensors 102a to control the operations of one or more actuators 102b. A second set of controllers 106 may be used to optimize the control logic or other operations performed by the first set of controllers. A third set of controllers 106 could be used to perform additional functions. Each controller 106 includes any suitable structure for controlling one or more aspects of an industrial process. At least some of the controller 106 may, for example, represent proportional-integral-derivative (PID) controllers or multivariable controllers, such as controllers implementing model predictive control (MPC) or other advanced predictive control (APC). In an example embodiment, each controller 106 may represent a computing device running a real-time operating system, a WINDOWS operating system, or the like.

Operator access to and interaction with the controllers 106 and other components of the system 104 may occur via one or more operator consoles 110. An operator console 110 may comprise computing or communication devices. Each operator console 110 may be used to provide information to an operator and/or receive information from an operator. For example, each operator console 110 may provide information identifying a current state of industrial process to the operator, such as values of various process variables and warnings, alarms, or other states associated with the industrial process. Each operator console 110 may also receive information affecting how the industrial process is controlled, such as by receiving setpoints or control modes for process variables controlled by the controllers 106 or other information that alters or affects how the controllers 106 control the industrial process. Each operator console 110 includes any suitable structure for displaying information to and interacting with an operator. For example, each operator console 110 may represent a computing device running a WINDOWS operating system or other operating system.

Multiple operator consoles 110 may be grouped together and used in one or more control rooms 112. Each control room 112 may include any number of operator consoles 110 in any suitable arrangement. In some embodiments, multiple control rooms 112 may be used to control an industrial plant, such as when each control room 112 includes operator consoles 110 used to manage a discrete part of the industrial plant.

Each server 116 may comprise a computing device that executes applications for users of the operator consoles 110 or other applications. The applications may be used to support various functions for the operator consoles 110, the controllers 106, or other components of the system 104. Each server 116 may represent a computing device running a WINDOWS operating system or other operating system. It will be appreciated that while shown as being local within the system 104, the functionality of the server 116 may be remote from the system 104. For instance, the functionality of server 116 may be implemented in a computing cloud 118 or a remote server communicatively coupled to the system 104 (e.g., via a gateway 120 or the like)

The system 104 may include a repository 114 and/or one or more servers 116. The repository 114 may be configured to stored various information about the system 104. The repository 114, for example, may store information that is generated by the various controllers 106 during the control of one or more industrial processes. The repository 114 includes any suitable structure for storing and facilitating retrieval of information. Although illustrated as a single component in FIG. 1B, the repository 114 may be located elsewhere in the system 104, or multiple repositories may be distributed in different locations in the system 104.

In some embodiments, the controllers 106 may be associated with a hierarchical architecture, where a given controller is associated with a particular level in the hierarchical architecture. For example, in some embodiments, the system 104 may be implemented using a Purdue model of process control, where the controllers 106 may be associated with a hierarchical architecture/structure. In the Purdue model, "Level 0" may include the one or more sensors 102a and the one or more actuators 102b. In the Purdue model, "Level 1" may include one or more first-level controllers 106a configured to use the measurements from one or more sensors 102a to control the operations of one or more actuators 102b. For example, the one or more first-level controllers 106a may be configured to receive measurement data from one or more sensors 102a and use the measurement data to generate control signals for one or more actuators 102b. The first-level controllers 106a and the one or more sensors 102a and/or one or more actuators may be communicatively coupled via a via network.

In the Purdue model, "Level 2" may include one or more machine-level controllers 106b. The machine-level controllers 106b may perform various functions to support the operation and control of the first-level controllers 106a, sensors 102a, and actuators 102b, which could be associated with a particular piece of industrial equipment (such as a boiler or other machine). For example, the machine-level controllers 106b could log information collected or generated by the first-level controllers 106a, such as measurement data from the sensors 102a or control signals for the actuators 102b. The machine-level controllers 106b could also execute applications that control the operation of the first-level controllers 106a, thereby controlling the operation of the actuators 102b. Alternatively or additionally, the machine-level controllers 106b could provide secure access to the controllers 106b. The one or more machine-level controllers 106b may be communicatively coupled to the first-level controllers 106a, the sensors 102a, and/or the actuators 102b. Each of the machine-level controllers 106b includes any suitable structure for providing access to, control of, or operations related to a machine or other individual piece of equipment. Each of the machine-level controllers 106b may, for example, represent a server computing device running an operating system. Although not shown, different machine-level controllers 106b may be used to control different pieces of equipment in a process system (where each piece of equipment is associated with one or more first-level controllers 106a, sensors 102a, and actuators 102b).

In the Purdue model, "Level 3" may include one or more unit-level controllers 106c. Each unit-level controller 106c is typically associated with a unit in a process system, which represents a collection of different machines operating together to implement at least part of a process. The unit-level controllers 106c may be configured to perform various functions to support the operation and control of components in the lower levels. For example, the unit-level controllers 106c may log information collected or generated by the components in the lower levels, execute applications that control the components in the lower levels, and provide secure access to the components in the lower levels. Each of the unit-level controllers 106c includes any suitable structure for providing access to, control of or operations related to one or more machines or other pieces of equipment in a process unit. Each of the unit-level controllers 106c may, for example, represent a server computing device running an operating system. Different unit-level controllers 106c may be used to control different units in a process system (where each unit is associated with one or more machine-level controllers 106b, first-level controllers 106a, sensors 102a, and/or actuators 102b).

In the Purdue model, "Level 4" may include one or more plant-level controllers 106d. Each plant-level controller 106d may be associated with one or more process plants, which may include one or more process units that implement the same, similar, or different processes. The plant-level controllers 106d perform various functions to support the operation and control of components in the lower levels. For example, the plant-level controllers 106d may be configured to execute one or more manufacturing execution system (MES) applications, scheduling applications, or other additional plant or process control applications. Each of the plant-level controllers 106d includes any suitable structure for providing access to, control of or operations related to one or more process units in a process plant. Each of the plant-level controllers 106d may, for example, represent a server computing device running a MICROSOFT WINDOWS operating system. Access to the plant-level controllers 106d may be provided by one or more operator consoles.

In the Purdue model, "Level 5" may include one or more enterprise-level controllers (not shown). Each enterprise-level controller may be configured to perform planning operations for multiple process plants and to control various aspects of the plants. The enterprise-level controllers may also perform various functions to support the operation and control of component in the plants. As particular examples, the enterprise-level controller may be configured to execute one or more order processing applications, enterprise resource planning (ERP) applications, advanced planning and scheduling (APS) applications, or any other or additional enterprise control applications. Each of the enterprise-level controllers may include any suitable structure for providing access to, control of, or operations related to control of one or more process plants. Each of the enterprise-level controllers may, for example, represent a server computing device running an operating system. As used herein, the term enterprise may refer to an organization having one or more process plants or other processing facilities to be managed. It would be appreciated that if a single process plant is to be managed, the functionality of the enterprise-level controller may be incorporated into a plant-level controller 106d. Access to the enterprise-level controllers may be provided by one or more operator consoles. As described above, the operator console may include any suitable structure for supporting user access and control of one or more components in the system 104.

Various levels of the Purdue model can include other components, such as one or more repositories. The repository(s) associated with each level could store any suitable information associated with that level or one or more other levels of the system 104. A repository may, for example, store information used during production scheduling and optimization.

In some embodiments, the various controllers 106 and operator consoles in FIG. 1B may comprise computing devices. For example, each of the controllers 106 (106a-106e) may include one or more processing devices and/or one or more memories for storing instructions and data used, generated, or collected by the processing devices. Each of the controllers 106 may also include at least one network interface, such as one or more Ethernet interfaces or wireless transceivers. Also, each of the operator consoles may include at least one network interface, such as one or more Ethernet interfaces or wireless transceivers.

In some embodiments, at least one component of the system 104 may be configured to support a mechanism (e.g., a system, apparatus, or the like) for asset monitoring. For example, the functionality may be implemented in an operator console 110, a server, or a computing cloud 118 or a remote server. The functionality may be configured for monitoring APC assets (and/or other assets) to, for example, ensure maximum performance of the assets In some embodiments, an asset represents any hardware, software, or other physical or virtual component within a process control and automation system, or an underlying industrial process being controlled. An asset may be associated with a single industrial site (or a portion thereof), multiple industrial sites (or portions thereof), or an enterprise. An asset may include a controller 106 (e.g., 106a-106e). In an example embodiment, an asset describes a controller 106 (e.g., any of controllers 106a-106e).

FIG. 2 illustrates a block diagram of an example apparatus that may be specially configured in accordance with at least one example embodiment of the present disclosure. Specifically, FIG. 2 depicts an example asset monitoring apparatus 200 ("apparatus 200") specially configured in accordance with at least some example embodiments of the present disclosure. In some embodiments, the asset monitoring system 103 and/or a portion thereof is embodied by one or more system(s), such as the apparatus 200 as depicted and described in FIG. 2. The apparatus 200 includes processor 202, memory 204, input/output circuitry 206, communications circuitry 208, and/or performance evaluation circuitry 210. In some embodiments, the apparatus 200 is configured, using one or more of the sets of circuitry embodied by processor 202, memory 204, input/output circuitry 206, communications circuitry 208, and/or performance evaluation circuitry 210, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In one embodiment, these functions, operations, and/or processes can be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the apparatus 200 provide or supplement the functionality of another particular set of circuitry. For example, the processor 202 in some embodiments provides processing functionality to any of the sets of circuitry, the memory 204 provides storage functionality to any of the sets of circuitry, the communications circuitry 208 provides network interface functionality to any of the sets of circuitry, and/or the like.

In some embodiments, the processor 202 (and/or co-processor or any other processing circuitry assisting or otherwise associated with the processor) is/are in communication with the memory 204 via a bus for passing information among components of the apparatus 200. In some embodiments, for example, the memory 204 is non-transitory and may include, for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the apparatus 200 to carry out various functions in accordance with example embodiments of the present disclosure.

The processor 202 may be embodied in a number of different ways. For example, in some example embodiments, the processor 202 includes one or more processing devices configured to perform independently. Additionally or alternatively, in some embodiments, the processor 202 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 202 is configured to execute instructions stored in the memory 204 or otherwise accessible to the processor. Alternatively or additionally, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Alternatively or additionally, as another example in some example embodiments, when the processor 202 is embodied as an executor of software instructions, the instructions specifically configure the processor 202 to perform the algorithms embodied in the specific operations described herein when such instructions are executed. As one particular example embodiment, the processor 202 is configured to perform various operations associated with performing improved asset monitoring associated with a process control and automation system.

In some embodiments, the apparatus 200 includes input/output circuitry 206 that provides output to the user and, in some embodiments, to receive an indication of a user input. In some embodiments, the input/output circuitry 206 is in communication with the processor 202 to provide such functionality. The input/output circuitry 206 may comprise one or more user interface(s) and in some embodiments includes a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a client device and/or other display associated with a user.

In some embodiments, the apparatus 200 includes communications circuitry 208. The communications circuitry 208 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 208 includes, for example, a network interface for enabling communications with a wired or wireless communications network. Additionally or alternatively in some embodiments, the communications circuitry 208 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 208 includes circuitry for interacting with the antenna(s) and/or other hardware or software to cause transmission of signals via the antenna(s) or to handle receipt of signals received via the antenna(s). **In** some embodiments, the communications circuitry 208 enables transmission to and/or receipt of data from user device, one or more asset(s) or accompanying sensor(s) , and/or other external computing device in communication with the apparatus 200.

In some embodiments, the apparatus 200 includes a performance evaluation circuitry 210. The performance evaluation circuitry 210 includes hardware, software, firmware, and/or a combination thereof, that supports generation of performance health scores for APC assets (and/or other assets) associated with a process control and automation system. In some embodiments, the performance evaluation circuitry 210 includes hardware, software, firmware, and/or a combination thereof, that identifies a set of one or more performance indicators for evaluating asset(s) and generates weighted performance indicator values for the set of one or more performance indicators for each asset of one or more assets. In some embodiments, the performance evaluation circuitry 210 includes hardware, software, firmware, and/or a combination thereof, that generates a performance health score for each asset of the one or more assets based on the set of one more weighted performance indicator values and/or uptime data associated with the respective asset. In some embodiments, the performance evaluation circuitry 210 includes hardware, software, firmware, and/or a combination thereof, initiates the performance of one or more prediction-based actions based on the performance health score. In some embodiments, the performance evaluation circuitry 210 includes a separate processor, specially configured field programmable gate array (FPGA), or a specially programmed application specific integrated circuit (ASIC).

Alternatively or additionally or in some embodiments, one or more of the sets of circuitries embodying processor 202, memory 204, input/output circuitry 206, communications circuitry 208, and/or performance evaluation circuitry 210. perform some or all of the functionality described as associated with another component. For example, in some embodiments, two or more of the sets of circuitry embodied by processor 202, memory 204, input/output circuitry 206, communications circuitry 208, and/or performance evaluation circuitry 210, are combined into a single module embodied in hardware, software, firmware, and/or a combination thereof. Similarly, in some embodiments, one or more of the sets of circuitry, for example performance evaluation circuitry 210, is/are combined with the processor 202, such that the processor 202 performs one or more of the operations described above with respect to each of these sets of circuitry embodied by the performance evaluation circuitry 210.

### EXAMPLE SYSTEM OPERATIONS

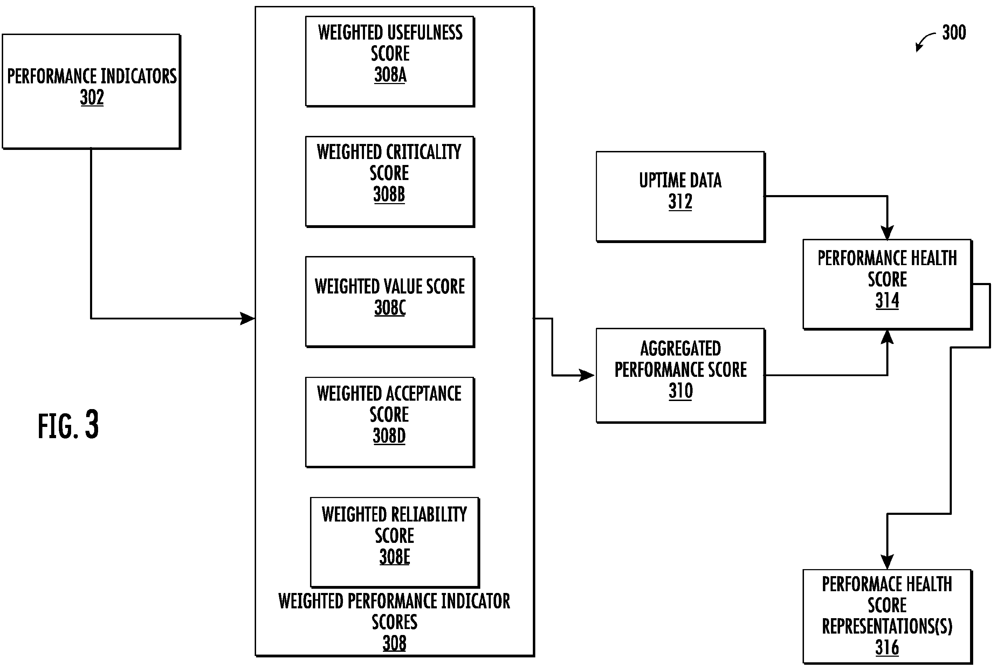

FIG. 3 is a dataflow diagram 300 showing example data structures for asset monitoring, such as APC asset monitoring, in accordance with at least some example embodiments of the present disclosure.

In some embodiments, a set of one or more performance indicators 302 (e.g., asset performance indicators 302) is identified. The set of one or more performance indicators 302 may be configured for evaluating the performance of an asset. The asset may be an APC asset, a PWO asset, or other assets associated with a process control and automation system (e.g., such as process control and automation system 104). In some embodiments, the set of one or more performance indicators 302 comprise one or more of usefulness performance indicator, criticality performance indicator, value performance indicator, acceptance performance indicator, or reliability performance indicator.

In some embodiments, a usefulness performance indicator describes how the capacity to add value is utilized. In some embodiments, a criticality performance indicator describes how necessary a controller is to a unit operation. In some embodiments, a value performance indicator describes how much value a controller is generating (e.g., the value of a controller to a unit operation and/or to the process control and automation system). In some embodiments, an acceptance performance indicator describes how smoothly a controller is operating (e.g., how well a controller is operating). In some embodiments, a reliability performance indicator describes how well control variable (CV) constraints are honored (e.g., with respect to a controller).

In some embodiments, a set of one or more weighted performance indicator scores 308 corresponding to the set of one or more performance indicators 302 is generated for an asset. For example, a set of one or more weighted performance indicator scores 308 is calculated for the asset. In some embodiments, the set of one or more weighted performance indicator scores 308 comprise one or more of weighted usefulness score 308A, weighted criticality score 308B, weighted value score 308C, weighed acceptance score 308D, or weighted reliability score 308E.

In some embodiments, a weight is assigned to each performance indicator. The weights may be assigned such that they add up to a predetermined value. In various embodiments, the weights are assigned such that they add up to one.

In some embodiments, generating a weighted usefulness score comprises determining, based on one more control variable conditions, a control variable usefulness score for each control variable of one or more control variables associated with the asset. In some embodiments, a control variable count is determined for the control variable (CV) based on a set of one more control variable constraint conditions. In some embodiments, the set of one or more control variable constraint conditions comprise one or more of (i) whether a quadratic coefficient of the CV is not "nan" and is not equal to zero, (ii) whether the CV steady state value is not less than a corresponding CV upper limit threshold, and (iii) whether the CV steady state value is not greater than a corresponding CV lower limit threshold.

In some embodiments, the CV upper limit threshold may be determined based on the equation: (CV High Limit - CV delta soft High Limit) * (1 - Tol), where "Tol" = 0.02 (or any suitable tolerance value). In some embodiments, the CV lower limit threshold may be determined based on the equation: (CV Low Limit + CV delta soft Low Limit) * (1 + Tol), where "Tol" = 0.02 (or any suitable tolerance value). According to various embodiments, a CV may be sampled periodically or otherwise at predetermined sampling frequency. According to various embodiments, the one or more control variable conditions are evaluated for a CV for each sample, and the CV count for the CV is increased by a predetermined amount (e.g., 1, 4, or the like) if at least one of the CV conditions is satisfied when the CV is available. For example, in some embodiments, the CV count for a CV may be determined over a sampling period in accordance with the following operations.

If the particular CV is available (AND):
If Quadratic Coefficient of that CV is not Nan & is not equal to zero (or)
CV steady State value >= control variable upper limit threshold. (or)
CV steady State value <= control variable lower limit threshold CV count = CV count + 1

In some embodiments, a CV status count is determined for the control variable based on a set of one more control variable status conditions. In some embodiments, the control variable status condition comprise at least whether the control variable satisfies a predetermined control variable status threshold. In an example embodiment, the predetermined control variable status threshold is a numerical value. It would be appreciated that in some other embodiments, the predetermined control variable status threshold may be other data types. According to various embodiments, the set of one or more control variable status conditions is evaluated for the CV for each sample over a sampling period, and the CV status count for the CV is increased by a predetermined amount (e.g., 1, 4, or the like) if the set of one or more CV status conditions is satisfied (e.g., CV status count = CV status count + 1) when the controller (e.g., asset is ON (e.g., in operating mode)). For example, in some embodiments, the CV status count for a CV may be determined over a sampling period in accordance with the following operations.

If controller is ON:
CV status < predetermined CV status threshold, then CV status count = CV status count + 1

In an example embodiment, CV sample that satisfies the one or more CV status condition may indicate that the CV is "good" or in "prediction mode."

In some embodiments, a CV usefulness score is generated for each CV for a given sampling period by determining the ratio of the CV count to the CV status count for the given period. In some embodiments, for each sampling period, the control variable usefulness value for each control variable is aggregated to generate an aggregated control variable usefulness score for the asset. For example, an aggregated control usefulness score may be calculated for the asset (e.g., with respect to a given sampling period) by adding together the individual CV usefulness scores.

In some embodiments, a manipulated variable (MV) count associated with the asset for the sampling period is determined and a cumulative usefulness score is determined based on the aggregated control variable usefulness scores and the manipulated variable count. In some embodiments, generating the cumulative usefulness score may comprise determining a ratio of the aggregated CV usefulness value to the MV count. In some embodiments, a weighted usefulness score is generated for the asset by applying a corresponding predetermined weight to the cumulative usefulness score.

In some embodiments, the weighted criticality score is determined based on one or more of MV status, CV availability, or MV availability. In example embodiments, a weighted criticality score is determined by mapping an objective function into manipulated variables and determining a ratio of the manipulated variables that have gradients to the number of manipulated variable (e.g., count of manipulated variables). In some embodiments, for each sample, if a CV associated with the asset is determined to be available, a CV gradient is determined for the CV. In some embodiments, the CV gradient is determined based on the equation: CV gradient = CV gradient + (CV Linear Coefficient + CV Quadratic Coefficient) * MV-CV Gain.

In some embodiments, for each sample, if an MV associated with the asset is determined to be available, an MV gradient is determined for the MV. In some embodiments, the MV gradient is determined based on the equation: MV Linear Coefficient + MV Quadratic Coefficient + CV Gradient. If the MV gradient is greater than zero, an MV gradient count for the sampling period is increased by a predetermined amount (e.g., 1, 4, or the like). If the MV active count is greater than zero, a criticality score is generated for the MV. In some embodiments, an MV criticality score is generated for each MV for a given sampling period by determining the ratio of the MV gradient count to the MV active count. In some embodiments, the MV count is determined based on MV status. For example, in some embodiments, the status of an MV is evaluated based on a predetermined MV status threshold, and the MV active count is increased by a predetermined amount (e.g., 1, 4, or the like) if the MV satisfies the MV status threshold. For example, the status of the MV (e.g., MV status) is evaluated for each sample over the sampling period, and the MV active count for the MV for the sampling period is increased by a predetermined amount (e.g., 1, 4, or the like) if the MV satisfies the MV status threshold. In some embodiments, the predetermined MV status threshold is a numerical value. It would be appreciated that in some other embodiments, the predetermined MV status threshold may be other data types.

In some embodiments, the ratio of the of the MV gradient count to the MV active count represents the maximum MV criticality score for the respective MV. For example, in such some embodiments, the MV criticality score for an MV may be determined based on the equation: (MV criticality score = Min(1.0, Max(0, MVGradientCount / MVActiveCount)). For example, in some embodiments, individual MV criticality score for an MV may be determined by performing the operations below:

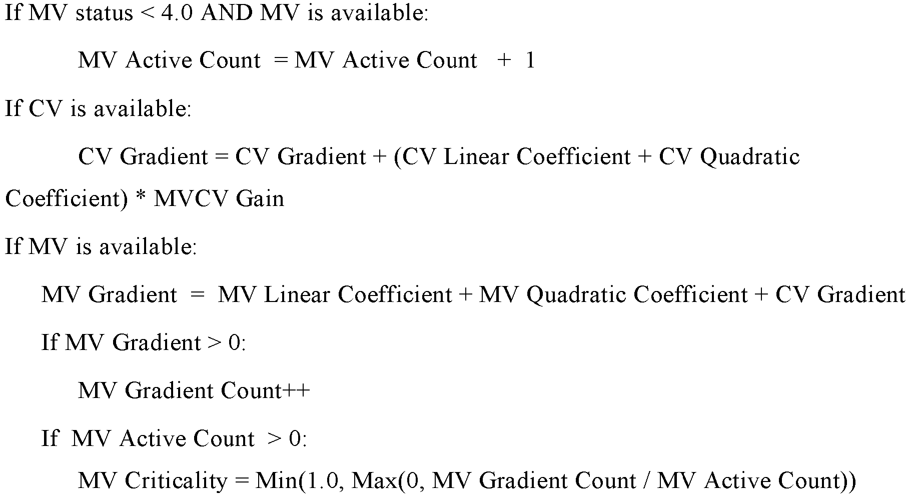

In some embodiments, for the sampling period, the MV criticality score for each MV is aggregated to generate an aggregated MV criticality score for the asset. For example, an aggregated MV criticality score may be calculated for the asset (e.g., for the given sampling period) by adding together the individual MV criticality scores.

In some embodiments, the number of MVs considered (e.g., number of MV's evaluated during the sampling period) is determined, and a cumulative criticality score is generated for the asset based on the aggregated MV criticality score and the number of MVs considered. In some embodiments, generating the cumulative criticality score may comprise determining a ratio of the aggregated MV criticality score and the number of MV considered. In some embodiments, a weighted criticality score is generated for the asset by applying a corresponding predetermined weight to the cumulative criticality score.

In some embodiments, the weighted value score is determined by generating a value score for the sampling period and applying a predetermined weight to the value score. In some embodiments, a weighted value score is determined based on a fraction of time a controller is close to its steady state objective function value. For example, in some embodiments, the value score is determined by performing the operations below: 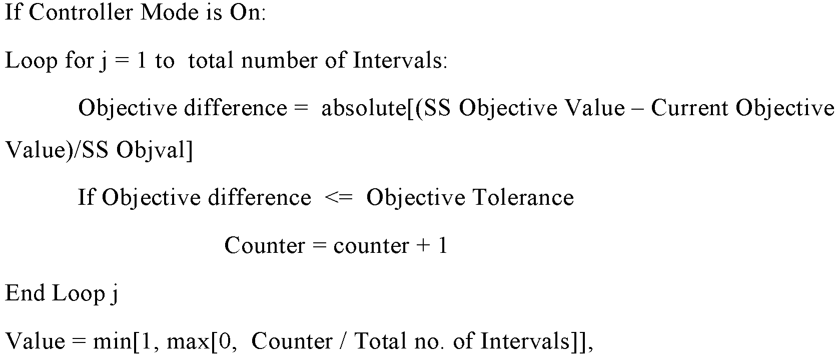 where: Objective Tolerance = Closeness band; Objective Tolerance = predetermined percentage.

In some embodiments, APC assets (e.g., controllers) that do not have an objective function are assigned a weighted value score of zero. In some example embodiments, APC assets (e.g., controllers) that do not have an objective function are assigned a weighted value score of 0.5.

In some embodiments, the weighted acceptance score is determined by calculating a cumulative acceptance score for the sampling period based on an acceptance score for one or more MVs associated with the asset and applying a predetermined weight to the cumulative acceptance score. In some embodiments, a weighted acceptance score is determined by calculating MV differences, adding the MV differences over time, and normalizing the result to a value between 0 and 1, and then subtracting it from one ("1"). In such some embodiments, the acceptance score and cumulative acceptance score may be determined by performing the operations below:

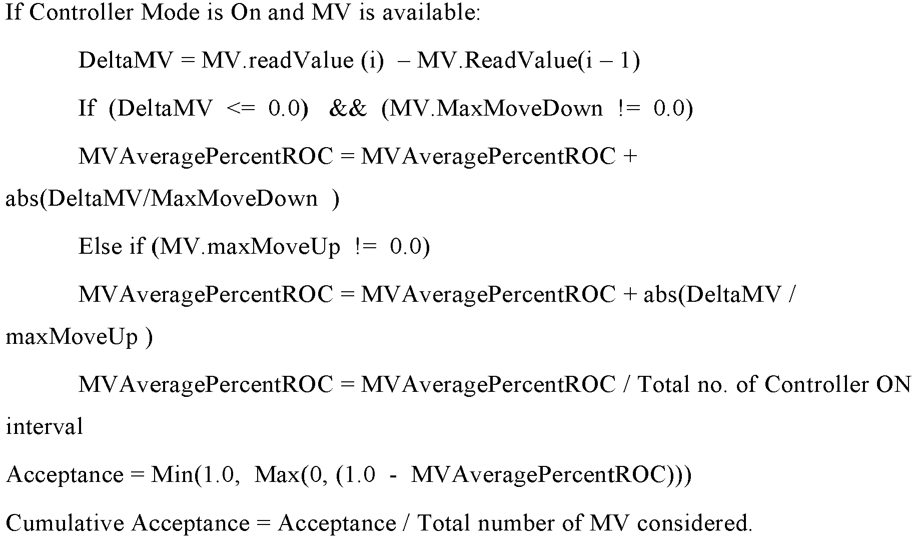

In example embodiments, a weighted reliability score is determined by aggregating (e.g., summing, and/or the like) CV constraint violations over time and normalizing the result to a value between 0 and 1, then subtracting it from one ("1"). For example, in some embodiments, the weighted reliability score is determined by calculating a cumulative reliability score for the sampling period based on aggregated reliability score that is determined based one or more CVs associated with the asset and applying a predetermined weight to the cumulative reliability score. In some embodiments, the aggregated reliability score may be calculated by adding together individual reliability scores for each of the one or more CVs. In some embodiments, the individual reliability scores ("CV Reliability"), aggregated reliability score ("Aggregated CV Reliability") and cumulative reliability score ("Cumulative Reliability) may be determined by performing the operations below:

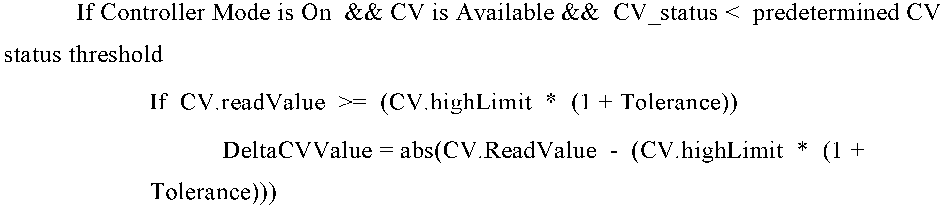

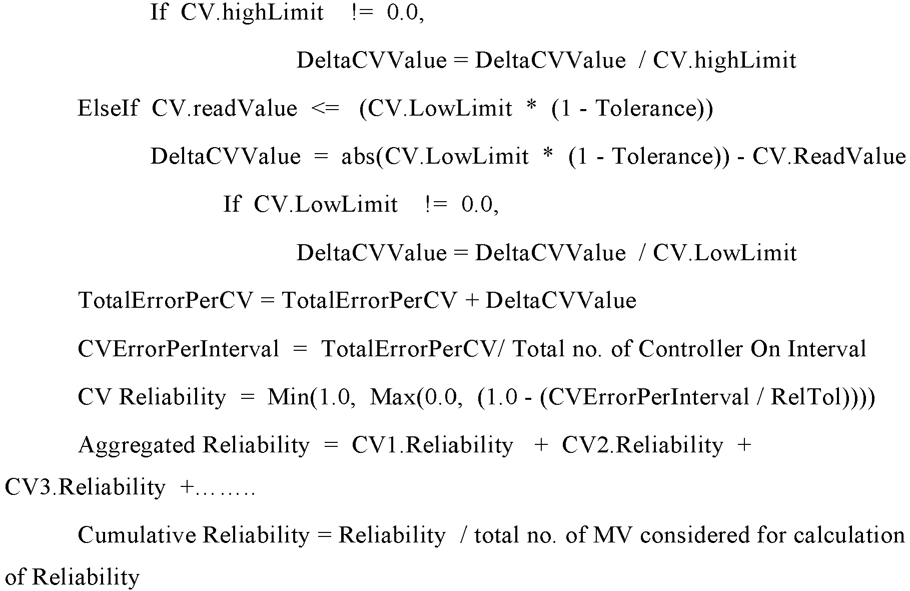

In some embodiments, aggregated performance score 310 is generated based on the weighted performance indicator scores 308. For example, in some embodiments, the aggregated performance score 310 may be calculated by adding together the individual weighted performance indicator scores 308. In some embodiments uptime data 312 for the asset for the sampling period is determined. In some embodiments, the uptime data comprises or otherwise represents the amount of time when the asset (e.g., controller) was in an "ON" state during the sampling period.

In some embodiments, a performance health score 314 (e.g., overall asset performance health score 314) is generated for the asset based on the aggregated performance score 310 and the uptime data. In some embodiments, the performance health score 314 may be calculated by performing the operation: performance health score = uptime data * aggregated performance score 310.

In some embodiments, the performance of one or more prediction-based actions is initiated based on the performance health score. In some embodiments, initiating the performance of one or more prediction-based actions comprises causing rendering of a user interface comprising one or more representations of the performance health score (performance health score representations 316). For example, one or more representations of the performance health score may be generated and rendered on a user interface for display on a user device. Alternatively or additionally, in some embodiments, initiating the performance of one or more prediction-based actions comprises generating actionable insight data based on the performance health score, and providing the actionable insight data to a user device (e.g., via a user interface). For example, actionable insights may be provided for poor performing assets and variables. Actionable insight data, for example, may include, a predicted fault, root cause of a fault, corrective action/solution to resolve a fault, or the like that are determined based on the performance health score for the asset. one or more Alternatively or additionally, in some embodiments, initiating the performance of one or more prediction-based actions comprises generating one or more alerts based on the performance health score, and providing the one or more alerts to a user.

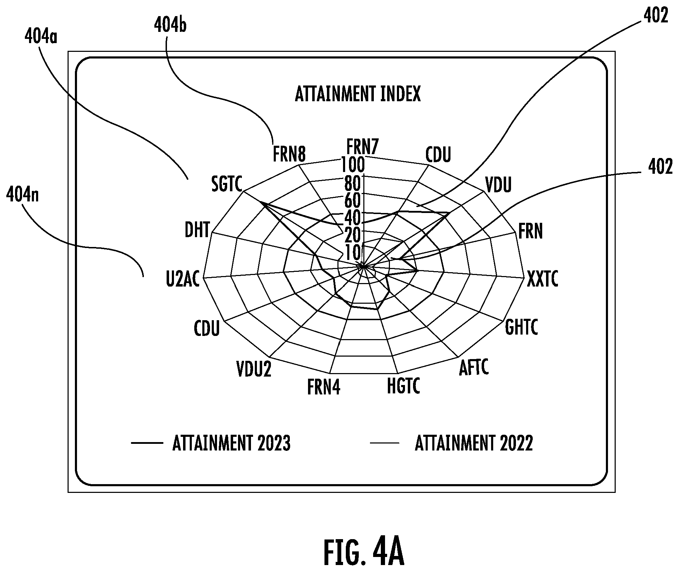

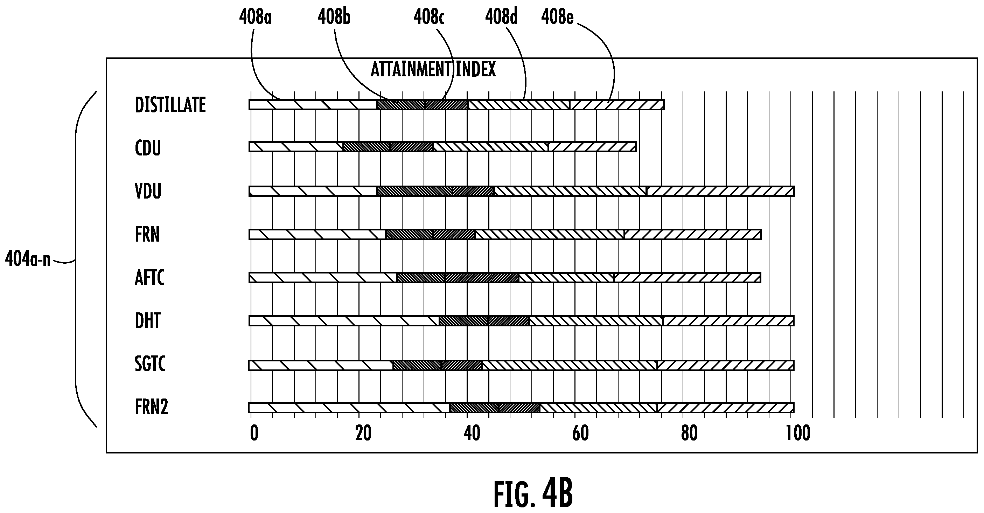

FIGS 4A-B show example user interfaces comprising one or more representations of a performance health score (also referred to as attainment index) for an asset in accordance with at least one example embodiment of the present disclosure. Specifically, FIG. 4A shows an example user interface comprising an example representation of performance health scores 402 for a plurality of assets 404a-n associated with a process control and automation system. For example, the performance health score 402 for each of a plurality of assets 404a-n for a first period (e.g., year 2023) and a second period (e.g., year 224) are displayed on the user interface. FIG. 2 shows a user interface comprising an example representation of performance health scores for a plurality of assets along with the contribution of each individual performance indicators. For example, as shown in FIG. 4B, the usefulness performance indicator 408a, criticality performance indicator 408b, value performance indicator 408c, acceptance performance indicator 408d, and reliability performance indicator 408e for each of a plurality of assets 404a-n are displayed on the user interface.

### EXAMPLE PROCESSES OF THE DISCLOSURE

Having described example systems and apparatuses, data visualizations, and formulas in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

Although the example processes depicts a particular sequence of operations, the sequence may be altered without departing from the scope of the present disclosure. For example, some of the operations depicted may be performed in parallel or in a different sequence that does not materially affect the function of the processes.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

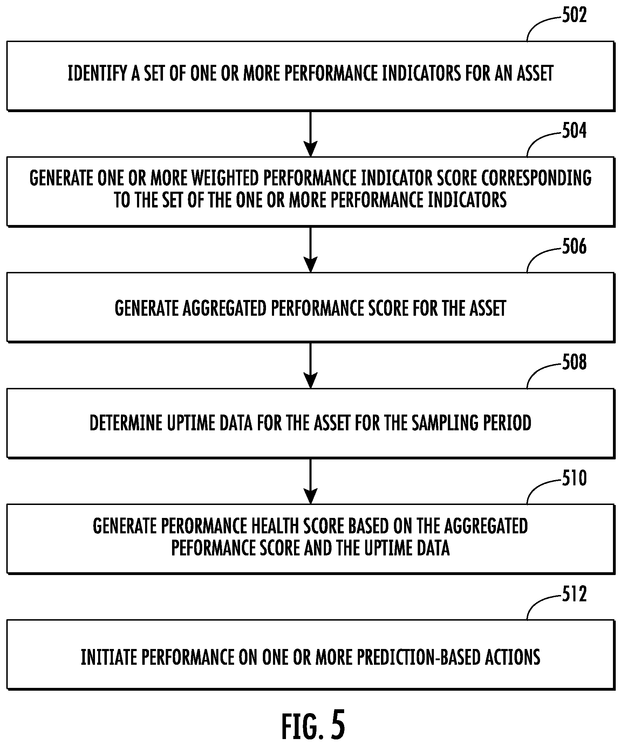

FIG. 5 illustrates a flowchart including operations of an example process for improved process optimization in accordance with at least one example embodiment of the present disclosure. Specifically, FIG. 5 depicts an example process 500 for improved asset monitoring. In some embodiments, the process 500 is embodied by computer program code stored on a non-transitory computer-readable storage medium of a computer program product configured for execution to perform the process as depicted and described. Alternatively or additionally, in some embodiments, the process 500 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 204 and/or another component depicted and/or described herein and/or otherwise accessible to the apparatus 200, for performing the operations as depicted and described. In some embodiments, the apparatus 200 is in communication with one or more external apparatus(es), system(s), device(s), and/or the like, to perform one or more of the operations as depicted and described. For example, the apparatus 200 in some embodiments is in communication with separate component(s) of a network, external network(s), and/or the like, to perform one or more of the operation(s) as depicted and described. For purposes of simplifying the description, the process 500 is described as performed by and from the perspective of the apparatus 200.

Although the example process 500 depicts a particular sequence of operations, the sequence may be altered without departing from the scope of the present disclosure. For example, some of the operations depicted may be performed in parallel or in a different sequence that does not materially affect the function of the process 500. In other examples, different components of an example device or system that implements the process 500 may perform functions at substantially the same time or in a specific sequence.

According to some examples, the method includes at operation 502, identifying a set of one or more performance indicators for an asset. The set of one or more performance indicators may be configured for evaluating the performance of each of one or more assets associated with an industrial control and automaton system. The asset may be an APC asset, a PWO asset, or other assets associated with the process control and automation system. In an example embodiments, the asset comprises a controller embodied by a process control and automation system. In some embodiments, the set of one or more performance indicators comprise one or more of usefulness performance indicator, criticality performance indicator, value performance indicator, acceptance performance indicator, or reliability performance indicator.

In some embodiments, a usefulness performance indicator describes how the capacity to add value is utilized. In some embodiments, a criticality performance indicator describes how necessary a controller is to a unit operation. In some embodiments, a value performance indicator describes how much value a controller is generating (e.g., the value of a controller to a unit operation and/or to the process control and automation system). In some embodiments, an acceptance performance indicator describes how smoothly a controller is operating (e.g., how well a controller is operating). In some embodiments, a reliability performance indicator describes how well control variable constraints are honored (e.g., with respect to a controller).
worst scenario of starting the event at a start time that differs from the planned start time.

According to some examples, the method includes at operation 504, generating a set of one or more weighted performance indicator scores for the asset with respect to a sampling period (e.g., corresponding to an evaluation period). The set of one of more weighted performance indicator scores may correspond to the set of one or more performance indicators. For example, a set of one or more weighted performance indicator scores may be calculated for the asset, where each weighed performance indicator score represents a value calculated for a performance indicator from the set of one or more performance indicators for a given sampling period. The set of one or more weighted performance indicator scores may comprise one or more of weighted usefulness score, weighted criticality score, weighted value score, weighed acceptance score, or weighted reliability score. In some embodiment

In some embodiments, generating a weighted usefulness score comprises determining, based on one more control variable conditions, a control variable usefulness score for each control variable of one or more control variables associated with the asset. The weighted usefulness score, for example, may be generated as described above with reference to FIG. 3. In some embodiments, the weighted criticality score, weighted value score, and weighted acceptance scores may also be generated as described above with reference to FIG 3.

According to some examples, the method includes at operation 506, generating an aggregated performance score for the asset based on the weight performance indicator scores. For example, in some embodiments, the aggregated performance score may be calculated by adding together the individual weighted performance indicator scores.

According to some examples, the method includes at operation 508, determining uptime data for the asset for the sampling period. In some embodiments, the uptime data comprises or otherwise represents the amount of time when the asset (e.g., controller) was in an "ON" state during the sampling period.

According to some examples, the method includes at operation 510, generating a performance health score (e.g., overall asset performance health score). In some embodiments, the performance health score 314 may be calculated by performing the operation: performance health score = uptime data * aggregated performance score 310.

According to some examples, the method includes at operation 512, initiating performance of one or more prediction-based actions. In some embodiments, initiating the performance of one or more prediction-based actions comprises causing rendering of a user interface comprising one or more representations of the performance health score (performance health score representation(s) 316). For example, one or more representations of the performance health score may be generated and rendered on a user interface for display on a user device. Alternatively or additionally, in some embodiments, initiating the performance of one or more prediction-based actions comprises generating actionable insight data based on the performance health score, and providing the actionable insight data to a user device (e.g., via a user interface). Alternatively or additionally, in some embodiments, initiating the performance of one or more prediction-based actions comprises generating one or more alerts based on the performance health score, and providing the one or more alerts to a user.

### CONCLUSION

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method for monitoring advanced process control assets, the computer-implemented method comprising:
identifying, by one or more processors, a set of one or more performance indicators for an asset;
generating, by the one or more processors, a set of one or more weighted performance indicator scores corresponding to the set of one or more performance indicators;
generating, by the one or more processors and based on the set of one or more performance indicators and uptime data, a performance health score for the asset by aggregating the set of one or more performance indicators with respect to the uptime data; and
initiating performance of one or more prediction-based actions based on the performance health score.

2. The computer-implemented method of claim 1, further comprising assigning a weight to each performance indicator of the set of one or more performance indicators.

3. The computer-implemented method of claim 2, wherein the set of one or more performance indicators comprise (i) usefulness performance indicator, (ii) criticality performance indicator, (iii) value performance indicator, (iv) acceptance performance indicator, and (v) reliability performance indicator.

4. The computer-implemented method of claim 3, wherein generating the set of one or more weighted performance indicator scores comprises generating, for a sampling period, a weighted usefulness score corresponding to the usefulness performance indicator by:
determining, based on one more control variable conditions, a control variable usefulness score for each control variable of one or more control variables associated with the asset;
aggregating the control variable usefulness score for each control variable to generate an aggregated control variable usefulness score;
determining a manipulated variable count associated with the asset;
determining a cumulative usefulness score by determining a ratio of the aggregated control variable usefulness score to the manipulated variable count; and
applying the corresponding assigned weight to the cumulative usefulness score.

5. The computer-implemented method of claim 4, wherein generating a control variable usefulness score for a control variable comprises:
determining, for the sampling period, a control variable count based on a set of one or more control variable constraint conditions of the one or more control variable conditions by determining whether the control variable satisfies at least one control variable constraint condition from the set of one or more control variable constraint conditions;
determining, for the sampling period, a control variable status count based on a set of one or more control variable status conditions of the one or more control variable conditions by determining whether the control variable satisfies the one or more control variable status conditions; and
determining a ratio of the control variable count to the control variable status count.

6. The computer-implemented method of claim 1, wherein generating the set of one or more weighted performance indicator scores comprises generating, for a sampling period, a weighted criticality score at least in part by:
mapping an objective into manipulated variables; and
determining ratio of the manipulated variables that have gradients to a count of manipulated variables.

7. The computer-implemented method of claim 1, wherein initiating the performance of one or more prediction-based actions comprises causing rendering of a user interface comprising one or more representations of the performance health score.

8. The computer-implemented method of claim 1, wherein initiating the performance of one or more prediction-based actions comprises:
generating actionable insight data based on the performance health score; and
providing the actionable insight data to a user device.

9. An apparatus comprising at least one processor and at least one memory storing instructions that, when executed by the at least one processor, cause the apparatus to:
identify a set of one or more performance indicators for an asset;
generate a set of one or more weighted performance indicator scores corresponding to the set of one or more performance indicators;
generate based on the set of one or more performance indicators and uptime data, a performance health score for the asset by aggregating the set of one or more performance indicators with respect to the uptime data; and
initiate performance of one or more prediction-based actions based on the performance health score.

10. The apparatus of claim 9, wherein the apparatus is further caused to assign a weight to each performance indicator of the set of one or more performance indicators.

11. The apparatus of claim 10, wherein the set of one or more performance indicators comprise (i) usefulness performance indicator, (ii) criticality performance indicator, (iii) value performance indicator, (iv) acceptance performance indicator, and (v) reliability performance indicator.

12. The apparatus of claim 11, wherein generating the set of one or more weighted performance indicator scores comprises generating, for a sampling period, a weighted usefulness score corresponding to the usefulness performance indicator by:
determining, based on one more control variable conditions, a control variable usefulness score for each control variable of one or more control variables associated with the asset;
aggregating the control variable usefulness score for each control variable to generate an aggregated control variable usefulness score;
determining a manipulated variable count associated with the asset;
determining a cumulative usefulness score by determining a ratio of the aggregated control variable usefulness score to the manipulated variable count; and
applying the corresponding assigned weight to the cumulative usefulness score.

13. The apparatus of claim 12, wherein generating a control variable usefulness score for a control variable comprises:
determining, for the sampling period, a control variable count based on a set of one or more control variable constraint conditions of the one or more control variable conditions by determining whether the control variable satisfies at least one control variable constraint condition from the set of one or more control variable constraint conditions;
determining, for the sampling period, a control variable status count based on a set of one or more control variable status conditions of the one or more control variable conditions by determining whether the control variable satisfies the one or more control variable status conditions; and
determining a ratio of the control variable count to the control variable status count.

14. The apparatus of claim 9, wherein generating the set of one or more weighted performance indicator scores comprises generating, for a sampling period, a weighted criticality score at least in part by:
mapping an objective into manipulated variables; and
determining ratio of the manipulated variables that have gradients to a count of manipulated variables.

15. At least one non-transitory computer-readable storage medium having computer coded instructions configured to, when executed by at least one processor:
identify a set of one or more performance indicators for an asset;
generate a set of one or more weighted performance indicator scores corresponding to the set of one or more performance indicators;
generate based on the set of one or more performance indicators and uptime data, a performance health score for the asset by aggregating the set of one or more performance indicators with respect to the uptime data; and
initiate performance of one or more prediction-based actions based on the performance health score.
